# EUROPÄISCHE PATENTANMELDUNG

(11) **EP 3 128 329 A1**
(43) Veröffentlichungstag der Anmeldung: **08.02.2017**
(21) Anmeldenummer: 15179830.3
(22) Anmeldetag: 05.08.2015
(51) Int. Cl.: G01N 35/00

(54) **VERFAHREN ZUM BETRIEB EINES AUTOMATISCHEN ANALYSEGERÄTS**

(71) Anmelder: Siemens Healthcare Diagnostics Products GmbH, 35041 Marburg (DE)
(72) Erfinder: Solbach, David, 60316 Frankfurt (DE); Kallies, Hartmut, 65719 Hofheim am Taunus (DE); Preidel, Markus, 60320 Frankfurt (DE); Verhalen, Christian, 65201 Wiesbaden (DE)

(57) **Zusammenfassung**

Die Erfindung betrifft ein Verfahren zum Prozessieren einer Probe in einem automatischen Analysegerät, das Analysegerät umfassend eine Steuereinheit mit einem Computersystem zur Steuerung des Prozessierens der Probe und eine Mehrzahl von Gerätebaugruppen zum Prozessieren der Probe.

## Beschreibung

Die Erfindung liegt auf dem Gebiet der automatischen in vitro-Diagnostiksysteme. Gegenstand der Erfindung ist ein Verfahren zum Prozessieren einer Probe in einem automatischen Analysegerät.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Automatisch arbeitende Analysatoren, die zur Untersuchung von biologischen Körperflüssigkeiten eingesetzt werden, füllen die benötigten Reagenzien beispielsweise mittels einer Pipettiervorrichtung mit einer Pipettiernadel in eine Messküvette ein. Die Messküvette wird dabei mit einem Küvettengreifer innerhalb des automatischen Analysegerätes zu verschiedenen Positionen mittels eines Robotorarms automatisch verfahren, der Teil einer Robotorstation ist. Nach der Messung wird die benutzte Messküvette z.B. zur Entsorgung durch einen Abfallschacht in einen Abfallbehälter verbracht.

In einem automatischen Analysator werden eine Vielzahl von Analysen von mehreren Proben gleichzeitig abgearbeitet. Zur Abarbeitung einer Analyse einer Probe wird eine Vielzahl von verschiedenen Gerätebaugruppen zum Prozessieren der Probe benötigt. Der zeitliche Einsatz der einzelnen Gerätebaugruppen muss entsprechend geplant werden, wobei eine Vielzahl von einschränkenden Randbedingungen und Eingabeparametern zu berücksichtigen sind.

Bisherige Ansätze arbeiteten dabei mit einem von einer Steuereinheit fest vorgegebenen Arbeitstakt mit einer Taktlänge von 30 oder mehr Sekunden. Innerhalb eines Arbeitstakts werden jeweils bestimmte Verfahrensschritte von den Gerätebaugruppen abgearbeitet. Ein Übergang zwischen Verfahrensschritten ist nur jeweils zu einem vollen Takt möglich. Somit ergeben sich häufig Verlustzeiten bei einzelnen Gerätebaugruppen, da z.B. der jeweilige Verfahrensschritt bereits in einem Bruchteil der Länge des Arbeitstakts abgearbeitet ist, aber das Prozessieren der nächsten Probe oder Analyse erst mit dem nächsten Arbeitstakt begonnen werden kann. Dies führt zu einer nicht optimalen Auslastung einzelner Gerätebaugruppen und erniedrigt die Abarbeitungsgeschwindigkeit sowie den Proben- und Analysendurchsatz erheblich.

Es ist daher Aufgabe der Erfindung, ein Verfahren zum Prozessieren einer Probe in einem automatischen Analysegerät sowie ein entsprechendes Analysegerät zur Verfügung zu stellen, welches eine erhöhte Abarbeitungsgeschwindigkeit und einen erhöhten Proben- und Analysendurchsatz bietet.

### Diese Aufgabe wird erfindungsgemäß durch die im Folgenden beschriebenen Gegenstände und Verfahren gelöst.

Die Erfindung geht von dem Gedanken aus, die Abarbeitungsgeschwindigkeit und den Proben- und Analysendurchsatz zu erhöhen, indem während der Abarbeitung möglichst wenige Verlustzeiten erzeugt werden, in denen z.B. einzelne Gerätebaugruppen inaktiv sind, da sie auf andere Gerätebaugruppen warten müssen, bzw. indem eine möglichst hohe Auslastung der einzelnen Gerätebaugruppen erreicht wird.

Es wurde gefunden, dass ein verbessertes Verfahren zum Prozessieren einer Probe erreicht werden kann, wenn auf einen fest vorgegebenen Arbeitstakt vollständig verzichtet oder alternativ die Länge der Arbeitstakte sehr stark reduziert wird. Dies hat den Vorteil, dass eine erhöhte Abarbeitungsgeschwindigkeit und ein erhöhter Proben- und Analysendurchsatz erreicht werden kann.

Gegenstand der vorliegenden Erfindung ist ein Verfahren zum Prozessieren einer Probe in einem automatischen Analysegerät, das Analysegerät umfassend eine Steuereinheit mit einem Computersystem zur Steuerung des Prozessierens der Probe und eine Mehrzahl von Gerätebaugruppen zum Prozessieren der Probe,
das Verfahren umfassend die Verfahrensschritte
a. Laden von vorbestimmten Informationen bezüglich von benötigten Gerätebaugruppen zum Prozessieren der Probe in einen ersten Speicher des Computersystems, die Informationen umfassend die benötigten Gerätebaugruppen, die benötigten Aktionen der Gerätebaugruppen einschließlich von Parameterwerten, deren zeitliche Dauer und zeitliche Beziehung zueinander, und
b. Ermittlung des momentanen und bisher geplanten Aktionszustandes der Mehrzahl von Gerätebaugruppen aufgrund des Prozessierens von allen anderen Proben in dem automatischen Analysegerät,
c. Laden des in Verfahrensschritt b. ermittelten momentanen und bisher geplanten Aktionszustandes der Mehrzahl von Gerätebaugruppen in einen zweiten Speicher des Computersystems,
d. Ermittlung des frühesten möglichen Zeitpunktes mittels des Computersystems, zu dem mit der Abarbeitung der benötigten Aktionen der Gerätebaugruppen gemäß der in Verfahrensschritt a. geladenen Informationen begonnen werden kann, ohne dass ein Konflikt mit dem in Verfahrensschritt c. geladenen momentanen und bisher geplanten Aktionszustandes der Mehrzahl von Gerätebaugruppen auftritt, und
e. Laden des in Verfahrensschritt d. ermittelten frühesten möglichen Zeitpunktes in einen dritten Speicher des Computersystems, und
f. Ergänzung des in Verfahrensschritt c. in den zweiten Speicher des Computersystems geladenen momentanen und bisher geplanten Aktionszustandes der Mehrzahl von Gerätebaugruppen um die in Verfahrensschritt a. in den ersten Speicher des Computersystems geladenen Informationen, wobei die erste der benötigten Aktionen der Gerätebaugruppen gemäß der in Verfahrensschritt a. geladenen Informationen frühestens zum in Verfahrensschritt d. ermittelten frühesten möglichen Zeitpunkt beginnt, und
g. Prozessieren der Probe durch Ausführung der benötigten Aktionen der Gerätebaugruppen gemäß des in Verfahrensschritt f. ergänzten, in den zweiten Speicher des Computersystems geladenen momentanen und bisher geplanten Aktionszustandes der Mehrzahl von Gerätebaugruppen.

Die vorbestimmten Informationen bezüglich von benötigten Gerätebaugruppen zum Prozessieren der Probe sind dabei beispielsweise aus einer Durchführungsvorschrift eines in vitro Testverfahrens zur Analyse einer Probe abgeleitet. Z.B. kann es sich um einen Bluttest zur Ermittlung einer Gerinnungszeit einer Probe handeln. Dabei kann vorteilhafterweise die Durchführungsvorschrift zunächst abgebildet werden auf eine Anzahl von abzuarbeitenden Prozessschritten, die für die Analyse der Probe mittels des in vitro Testverfahrens notwendig sind. Z.B. kann es sich bei den Prozessschritten um die Prozessschritte handeln, die zur Bestimmung der Gerinnungszeit der Probe notwendig sind.

Zur Abarbeitung der Prozessschritte werden geräteseitig Gerätebaugruppen benötigt. Die Gerätebaugruppen können Aktionen ausführen, die für die Abarbeitung der Prozessschritte notwendig sind. Die Ausführung einer Aktion kann dabei von einem Parameterwert oder mehreren Parameterwerten abhängen. Die Informationen zu den benötigten Aktionen der Gerätebaugruppen umfassen den entsprechenden Parameterwert oder die Parameterwerte. Bei einem Parameterwert kann es sich z.B. um die Länge eines Verfahrweges, um eine Verweildauer, eine Temperatur oder eine Positionsangabe handeln. Eine Aktion kann eine zeitliche Dauer aufweisen. Mehrere Aktionen können eine zeitliche Beziehung zueinander aufweisen.

Der Analyzer arbeitet die abzuarbeitenden Prozessschritte automatisiert ab, indem entsprechende Aktionen von Gerätebaugruppen durchgeführt werden. Dabei kann eine Anzahl von Aktionen, die zur Abarbeitung eines Teils eines Prozessschritts, eines Prozessschritts oder mehrerer Prozessschritte benötigt werden, zu entsprechenden Einheiten zusammengefasst werden.

Beispielsweise kann geräteseitig für den Analyzer eine Anzahl von Makroaktionen definiert werden, mit denen z.B. jeweils ein Prozessschritt abgearbeitet werden kann.

Die Makroaktionen setzen sich dabei z.B. aus einer Mehrzahl von Analyzeraktionen zusammen, die zur Abarbeitung bestimmter Teile eines Prozessschritts notwendig sind.

Die Analyzeraktionen setzten sich dabei wiederum z.B. aus einer Mehrzahl von Aktionen von Gerätebaugruppen zusammen, die zur Abarbeitung bestimmter Unterteile eines Teiles eines Prozessschritts notwendig sind. Eine Aktion einer Gerätebaugruppe wird vorteilhafterweise z.B. von genau einer Gerätebaugruppe ausgeführt.

Die abzuarbeitenden Prozessschritte werden vorteilhafterweise jeweils hierarchisch aufgespalten und in Form einer Vielzahl von einzelnen Aktionen der verschiedenen Gerätebaugruppen abgebildet, die der Analyzer dann zur Analyse der Probe abarbeiten kann.

Diese hierarchische Vorgehensweise hat den Vorteil, dass besonders flexibel auf Veränderungen z.B. betreffend eines Hardware-Moduls des Analyzers reagiert werden kann, das z.B. eine Gerätebaugruppe oder mehrere Gerätebaugruppen umfasst. Es sind dann, falls erforderlich, z.B. nur in der entsprechenden Hierarchiestufe Veränderungen vorzunehmen, wie z.B. eine Anpassung einer Steuersoftware. Die Ebenen z.B. der Analyzeraktionen und Makroaktionen bedürfen keiner Veränderung.

Der Begriff "hierarchisch" wird im übertragenen Sinne von "in der Art einer pyramidenförmigen Rangfolge streng gegliedert" verwendet.

Vorteilhafterweise sind z.B. die Makroaktionen so allgemein gehalten, dass sie unverändert in einer Vielzahl von unterschiedlichen Durchführungsvorschriften zur Analyse von Proben auf unterschiedliche Eigenschaften wie z.B. auf verschiedene Gerinnungszeiten, dem Vorliegen von Infektionen und/oder der chemischen Zusammensetzung der Probe eingesetzt werden können. Dies vereinfacht und beschleunigt z.B. die Implementierung neuer Durchführungsvorschriften auf einem Analyzer erheblich und kann zu entsprechenden Kosteneinsparungen führen.

Die Ermittlung des momentanen und bisher geplanten Aktionszustandes der Gerätebaugruppen aufgrund des Prozessierens von allen anderen Proben in dem automatischen Analysegerät erfolgt bevorzugt mittels des Computersystems der Steuereinheit zur Steuerung des Prozessierens der Probe. Beispielsweise übermitteln die Gerätebaugruppen Informationen bezüglich ihres momentanen Aktionszustandes an die Steuereinheit oder die Steuereinheit kann entsprechende Informationen von den Gerätebaugruppen abrufen. Weiter wird bevorzugt mittels des Computersystems der bisher geplante Aktionszustand der Gerätebaugruppen ermittelt, der bevorzugt in einem Speicher des Computersystems abgelegt ist.

In einer bevorzugten Ausführung handelt es sich bei dem erfindungsgemäßen Verfahren um ein Verfahren zum Prozessieren einer Vielzahl von Proben in einem automatischen Analysegerät.

Bei den Gerätebaugruppen handelt es sich z.B. um eine beispielsweise scheibenförmige Transport- und Lagereinrichtung für Probengefäße, eine beispielsweise scheibenförmige Transport- und Lagereinrichtung für Reagenzbehälter, einen Inkubationsblock, ein Photometer oder eine andere Baugruppe des automatischen Analysegeräts, die zum Prozessieren von Proben benötigt wird.

In einer bevorzugten Ausführung ist die zeitliche Auflösung bezüglich des momentanen und bisher geplanten Aktionszustandes der Mehrzahl von Gerätebaugruppen größer als 30 Sekunden, bevorzugt größer als 1 Sekunde, besonders bevorzugt größer als oder gleich 1 Millisekunde. In weiterer bevorzugter Ausführung ist die zeitliche Auflösung bezüglich mindestens eines Zeitpunktes, mindestens einer zeitlichen Dauer und/oder mindestens einer zeitlichen Beziehung größer als 30 Sekunden, bevorzugt größer als 1 Sekunde, besonders bevorzugt größer als oder gleich 1 Millisekunde. Besonders vorteilhaft ist es, wenn die zeitliche Auflösung bezüglich des momentanen und bisher geplanten Aktionszustandes der Mehrzahl von Gerätebaugruppen, mindestens eines Zeitpunktes, mindestens einer zeitlichen Dauer und/oder mindestens einer zeitliche Beziehung 0,1 Sekunden beträgt. Dies hat den Vorteil, dass durch die größere zeitliche Auflösung eine höhere Auslastung der einzelnen Gerätebaugruppen erreicht werden kann und die Abarbeitungsgeschwindigkeit und der Proben- und Analysendurchsatz erhöht werden kann.

In weiterer bevorzugter Ausführung beginnt in Verfahrensschritt f. die erste der benötigten Aktionen der Gerätebaugruppen gemäß der in Verfahrensschritt a. geladenen Informationen zum in Verfahrensschritt d. ermittelten frühesten möglichen Zeitpunkt. Dies hat den Vorteil, dass eine optimierte Auslastung der entsprechenden Gerätebaugruppen erreicht wird.

In weiterer bevorzugter Ausführungsform beginnt in Verfahrensschritt f. die erste der benötigten Aktionen der Gerätebaugruppen gemäß der in Verfahrensschritt a. geladenen Informationen zum nächsten vorbestimmten Zeitpunkt aus einer Menge von vorbestimmten Zeitpunkten, der auf den in Verfahrensschritt d. ermittelten frühesten möglichen Zeitpunkt folgt. Somit kann ein fester Arbeitstakt, wie er in herkömmlichen Analyzern vorgesehen ist, implementiert werden. Dies hat den Vorteil, dass die Abarbeitung einer Analyse genauso erfolgen kann, wie sie auf einem herkömmlichen Analyzer erfolgen würde. Dies kann z.B. für die Vergleichbarkeit von Analyseergebnissen vorteilhaft sein oder hinsichtlich der behördlichen Zulassung von Analysegeräten oder einzelnen Analysen.

In weiterer bevorzugter Ausführungsform wird bei unvorhergesehenen Verzögerungen des momentanen und bisher geplanten Aktionszustandes der Mehrzahl von Gerätebaugruppen, z.B. durch Verzögerungen beim Prozessieren von anderen Proben in dem automatischen Analysegerät, in Verfahrensschritt f. die erste der benötigten Aktionen der Gerätebaugruppen gemäß der in Verfahrensschritt a. geladenen Informationen dynamisch auf einen der unvorhergesehenen Verzögerung entsprechenden späteren Zeitpunkt verschoben. Dies hat den Vorteil, dass besonders flexibel auf unvorhergesehene Verzögerungen reagiert werden kann und der durch eine unvorhergesehene Verzögerung verursachte Zeitverlust minimiert wird.

Der Begriff "dynamisch" wird im übertragenen Sinne von "auf eine (zeitliche) Entwicklung reagierend" verwendet. Eine unvorhergesehene Verzögerung stellt beispielsweise eine zeitliche Entwicklung dar.

In weiterer bevorzugter Ausführungsform befindet sich die Probe in einer nicht ortsfesten Küvette, und mindestens eine, bevorzugt mindestens zwei Gerätebaugruppen sind als Aufnahmepositionen für die Küvette ausgestaltet. Dies hat den Vorteil, dass eine Vielzahl von Proben und Analysen besonders flexibel abgearbeitet werden können.

In weiterer bevorzugter Ausführungsform ermittelt das Computersystem die Auslastung der einzelnen Gerätebaugruppen zum Prozessieren der Probe und lädt die Auslastung in einen vierten Speicher des Computersystems. Dies hat den Vorteil, dass jederzeit die Information über die Auslastung einzelner Gerätebaugruppen verfügbar ist und aus dem vierten Speicher abgerufen werden kann.

In weiterer bevorzugter Ausführungsform optimiert das Computersystem die Auslastung der einzelnen Gerätebaugruppen, um eine möglichst hohe Auslastung von möglichst vielen der Gerätebaugruppen zu erreichen.

Ein weiterer Gegenstand der Erfindung ist ein automatisches Analysegerät mit einer Steuereinheit mit einem Computersystem zur Steuerung des Prozessierens der Probe und einer Mehrzahl von Gerätebaugruppen zum Prozessieren der Probe, wobei die Steuereinheit so konfiguriert ist, dass sie das Prozessieren der Probe in dem automatischen Analysegerät gemäß einem der oberhalb beschriebenen Verfahren steuern kann.

In einer bevorzugten Ausführung des erfindungsgemäßen Analysegeräts umfasst das Analysegerät eine Steuereinheit mit einem Computersystem zur Steuerung des Prozessierens einer Vielzahl von Proben und einer Mehrzahl von Gerätebaugruppen zum Prozessieren der Proben, wobei die Steuereinheit so konfiguriert ist, dass sie das Prozessieren der Proben in dem automatischen Analysegerät gemäß einem der oberhalb beschriebenen Verfahren steuern kann.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Bei einer Messküvette handelt es sich beispielsweise um eine Küvette oder ein Reaktionsgefäß aus Glas, Kunststoff oder Metall. Vorteilhafterweise ist die Messküvette aus optisch transparenten Materialien gefertigt, was besonders beim Einsatz von optischen Analyseverfahren vorteilhaft sein kann. Die Begriffe "Messküvette" und "Küvette" werden synonym verwendet.

Ein Konflikt bezüglich einer Gerätebaugruppe kann beispielsweise auftreten, wenn eine Gerätebaugruppe in einem bestimmten Zeitraum oder zu einem bestimmten Zeitpunkt belegt ist, d.h. beispielsweise eine Aktion zur Abarbeitung einer ersten Probe ausführt, und versucht wird, gleichzeitig auf die Gerätebaugruppe für die Abarbeitung einer zweiten Probe zuzugreifen oder für den Zeitraum oder den Zeitpunkt zu verplanen.

Kein Konflikt bezüglich einer Baugruppe liegt beispielsweise vor, wenn eine Baugruppe in einem bestimmten Zeitraum oder zu einem bestimmten Zeitpunkt nicht belegt ist und für die Ausführung einer Aktion zur Abarbeitung einer Probe zur Verfügung steht oder für den Zeitraum oder den Zeitpunkt verplant werden kann.

Die Erfindung wird anhand von Zeichnungen exemplarisch näher erläutert. Darin zeigen:
FIG 1 eine schematische Darstellung des geplanten Aktionszustandes von Gerätebaugruppen,
FIG 2 schematisch die Vorgehensweise bei der Ermittlung des frühesten möglichen Zeitpunktes, zu dem mit der Abarbeitung von Aktionen von Gerätebaugruppen begonnen werden kann,
FIG 3 schematisch die Vorgehensweise bei unvorhergesehenen Verzögerungen bezüglich des geplanten Aktionszustandes von Gerätebaugruppen.

Gleiche Teile sind in allen Figuren mit denselben Bezugszeichen versehen.

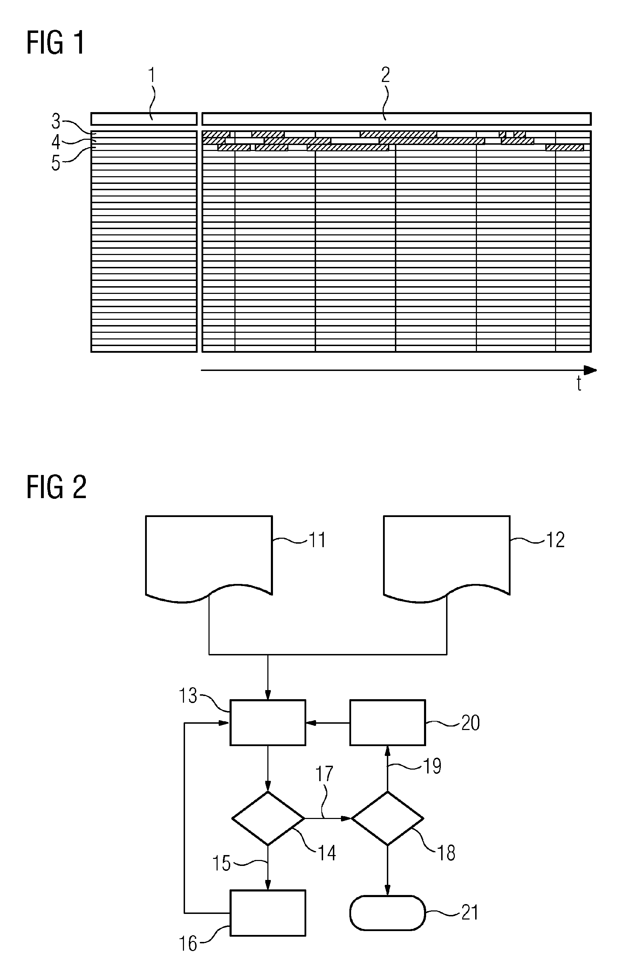

Die Gerätebaugruppen gemäß FIG 1 sind Teile eines nicht näher dargestellten automatischen Analysegeräts, das zum Prozessieren einer Probe ausgelegt ist und das eine Steuereinheit mit einem Computersystem zur Steuerung des Prozessierens der Probe und eine Mehrzahl von Gerätebaugruppen zum Prozessieren der Probe umfasst, wie z.B. Pipettiereinrichtungen und Transporteinrichtungen.

FIG 1 zeigt schematisch eine schematische Darstellung des momentanen und bisher geplanten Aktionszustandes von Gerätebaugruppen aufgrund des Prozessierens von Proben in dem automatischen Analysegerät. Eine erste (1) Liste enthält alle relevanten Gerätebaugruppen. Bei den Gerätebaugruppen handelt es sich um eine scheibenförmige Transport- und Lagereinrichtung für Probengefäße (3), eine scheibenförmige Transport- und Lagereinrichtung für Reagenzbehälter (4), einen Inkubationsblock (5), ein Photometer und andere Baugruppen des automatischen Analysegeräts, die zum Prozessieren von Proben benötigt werden. Eine zur ersten (1) Liste korrespondierende zweite (2) Liste zeigt eine graphische Darstellung des Belegungszustandes der jeweiligen Gerätebaugruppe über die Zeit t. Zeiträume, in denen die jeweilige Gerätebaugruppe belegt ist, sind schraffiert. In den nicht-schraffierten Zeiträumen ist die jeweilige Gerätebaugruppe nicht belegt. In der ersten (1) Liste wird weiter der Auslastungsgrad der jeweiligen Gerätebaugruppe in Prozent angezeigt (nicht gezeigt), der sich aus den Zeiträumen, in denen die jeweilige Gerätebaugruppe belegt ist und den Zeiträumen, in denen die jeweilige Gerätebaugruppe nicht belegt ist, ermittelt wird. Wenn eine Gerätebaugruppe eine Aktion ausführt oder geplant ist, dass sie zu einem bestimmten Zeitpunkt oder in einem bestimmten Zeitraum eine Aktion ausführt, ist sie belegt, andernfalls ist sie nicht belegt.

FIG 2 zeigt schematisch die Vorgehensweise bei der Ermittlung des frühesten möglichen Zeitpunktes mittels des Computersystems, zu dem mit der Abarbeitung von neu einzuplanenden (11) Aktionen der Gerätebaugruppen begonnen werden kann, ohne dass ein Konflikt mit den momentanen und bisher geplanten (12) Aktionen auftritt. Die neu einzuplanenden (11) Aktionen sind beispielsweise aus einer Durchführungsvorschrift eines Bluttests zur Ermittlung einer Gerinnungszeit einer Probe abgeleitet und umfassen Informationen bezüglich von benötigten Gerätebaugruppen zum Prozessieren der Probe, die benötigten Aktionen der Gerätebaugruppen einschließlich von Parameterwerten, deren zeitliche Dauer und zeitliche Beziehung zueinander.

Zu einem Zeitpunkt n wird in Schritt (13) mit der Einplanung der ersten Aktion X der neu einzuplanenden (11) Aktionen in die Liste der momentanen und bisher geplanten (12) Aktionen begonnen. Zunächst wird in Schritt (14) geklärt, ob ein Konflikt bezüglich der betreffenden Baugruppe oder der Baugruppen vorliegt.

Falls ein Konflikt (15) vorliegt, wird in einem Schritt (16) ein späterer Zeitpunkt n+1 festgelegt, für den erneut versucht wird, die Einplanung der Aktion X vorzunehmen.

Falls kein (17) Konflikt vorliegt wird die Aktion X zum Zeitpunkt n eingeplant und in einem Schritt (18) geprüft, ob weitere neu einzuplanende (11) Aktionen vorliegen.

Falls mindestens eine weitere neu einzuplanende (11) Aktion vorliegt, wird in einem Schritt (20) mit der Einplanung der Aktion X+1 fortgefahren. Andernfalls wird in einem Schritt (21) der Prozess des Einplanens beendet und keine weitere Einplanung erfolgt.

Anschließend wird die Probe durch Ausführung der benötigten Aktionen der Gerätebaugruppen gemäß der ergänzten, momentanen und bisher geplanten Aktionszustandes der Gerätebaugruppen prozessiert.

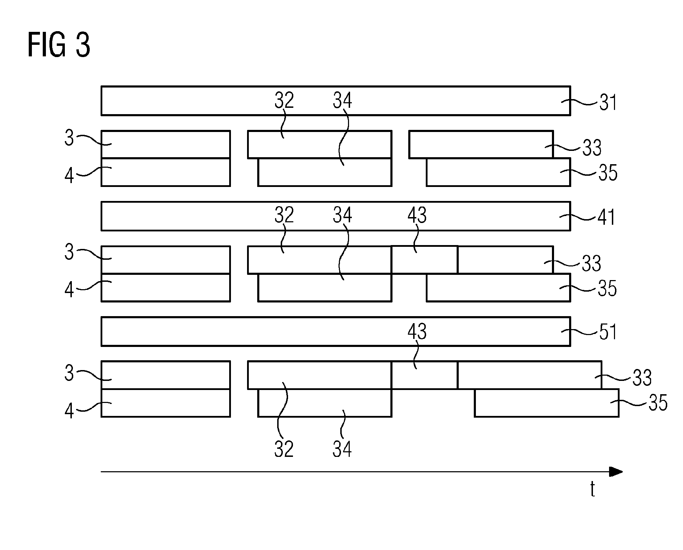

FIG 3 zeigt schematisch die Vorgehensweise bei unvorhergesehenen Verzögerungen bezüglich des Aktionszustandes von Gerätebaugruppen. Unvorhergesehene Verzögerungen des momentanen und bisher geplanten Aktionszustandes der Gerätebaugruppen können z.B. durch Verzögerungen beim Prozessieren von Proben in dem automatischen Analysegerät auftreten. Beim Auftreten einer Verzögerung (41) wird ein ursprünglicher (31) Ausführungsplan dynamisch verändert und ein neuer (51) Ausführungsplan erstellt.

Der ursprüngliche (31) Ausführungsplan zeigt für alle relevanten Baugruppen, wie z.B. die Transport- und Lagereinrichtung für Probengefäße (3) und die Transport- und Lagereinrichtung für Reagenzgefäße (4), und enthält Informationen bezüglich der abzuarbeitenden Aktionen (32, 33, 34, 35) über die Zeit t.

Beim Auftreten (41) einer Verzögerung wird der ursprüngliche Ausführungsplan (31) dynamisch in Abhängigkeit der Zeitdauer der Verzögerung (43) und des Zeitpunktes, zu dem die Verzögerung (43) auftritt, abgeändert und ein neuer (51) Ausführungsplan erstellt. Dabei werden sowohl abzuarbeitende Aktionen (33), die direkt betroffen sind, wie auch abzuarbeitende Aktionen (35), die indirekt betroffen sind, in Abhängigkeit der Verzögerung (43) zeitlich entsprechend verschoben und neu eingeplant. Somit bleiben die zeitlichen Bezüge der direkt und indirekt betroffenen, abzuarbeitenden Aktionen (33, 35) erhalten.

### Bezugszeichenliste

- 1: erste Liste
- 2: zweite Liste
- 3: Transport- und Lagereinrichtung für Probengefäße
- 4: Transport- und Lagereinrichtung für Reagenzbehälter
- 5: Inkubationsblock
- 11: neu einzuplanende Aktionen
- 12: momentane und bisher eingeplante Aktionen
- 13, 14, 16, 18, 20, 21: Schritt
- 15: Konflikt
- 17: kein Konflikt
- 31: ursprünglicher Ausführungsplan
- 32, 33, 34, 35: abzuarbeitende Aktion
- 41: Auftreten einer Verzögerung
- 43: Verzögerung
- 51: neuer Ausführungsplan

- t: Zeit

## Patentansprüche

1. Verfahren zum Prozessieren einer Probe in einem automatischen Analysegerät, das Analysegerät umfassend eine Steuereinheit mit einem Computersystem zur Steuerung des Prozessierens der Probe und eine Mehrzahl von Gerätebaugruppen zum Prozessieren der Probe,
das Verfahren umfassend die Verfahrensschritte
a. Laden von vorbestimmten Informationen bezüglich von benötigten Gerätebaugruppen zum Prozessieren der Probe in einen ersten Speicher des Computersystems, die Informationen umfassend die benötigten Gerätebaugruppen, die benötigten Aktionen der Gerätebaugruppen einschließlich von Parameterwerten, deren zeitliche Dauer und zeitliche Beziehung zueinander, und
b. Ermittlung des momentanen und bisher geplanten Aktionszustandes der Gerätebaugruppen aufgrund des Prozessierens von anderen Proben in dem automatischen Analysegerät,
c. Laden des in Verfahrensschritt b. ermittelten momentanen und bisher geplanten Aktionszustandes der Gerätebaugruppen in einen zweiten Speicher des Computersystems,
d. Ermittlung des frühesten möglichen Zeitpunktes mittels des Computersystems, zu dem mit der Abarbeitung der benötigten Aktionen der Gerätebaugruppen gemäß der in Verfahrensschritt a. geladenen Informationen begonnen werden kann, ohne dass ein Konflikt mit dem in Verfahrensschritt c. geladenen momentanen und bisher geplanten Aktionszustandes der Gerätebaugruppen auftritt, und
e. Laden des in Verfahrensschritt d. ermittelten frühesten möglichen Zeitpunktes in einen dritten Speicher des Computersystems, und
f. Ergänzung des in Verfahrensschritt c. in den zweiten Speicher des Computersystems geladenen momentanen und bisher geplanten Aktionszustandes der Gerätebaugruppen um die in Verfahrensschritt a. in den ersten Speicher des Computersystems geladenen Informationen, wobei die erste der benötigten Aktionen der Gerätebaugruppen gemäß der in Verfahrensschritt a. geladenen Informationen frühestens zum in Verfahrensschritt d. ermittelten frühesten möglichen Zeitpunkt beginnt, und
g. Prozessieren der Probe durch Ausführung der benötigten Aktionen der Gerätebaugruppen gemäß des in Verfahrensschritt f. ergänzten, in den zweiten Speicher des Computersystems geladenen momentanen und bisher geplanten Aktionszustandes der Gerätebaugruppen.

2. Verfahren nach Anspruch 1, wobei die zeitliche Auflösung bezüglich des momentanen und bisher geplanten Aktionszustandes der Gerätebaugruppen größer als 30 Sekunden, bevorzugt größer als 1 Sekunde, besonders bevorzugt größer als oder gleich 1 Millisekunde ist.

3. Verfahren nach einem der vorhergehenden Ansprüche, wobei die zeitliche Auflösung bezüglich mindestens eines Zeitpunktes, mindestens einer zeitlichen Dauer und/oder mindestens einer zeitliche Beziehung größer als 60 Sekunden, bevorzugt größer als 1 Sekunde, besonders bevorzugt größer als oder gleich 1 Millisekunde ist.

4. Verfahren nach einem der vorhergehenden Ansprüche, wobei in Verfahrensschritt f. die erste der benötigten Aktionen der Gerätebaugruppen gemäß der in Verfahrensschritt a. geladenen Informationen zum in Verfahrensschritt d. ermittelten frühesten möglichen Zeitpunkt beginnt.

5. Verfahren nach einem der vorhergehenden Ansprüche, wobei in Verfahrensschritt f. die erste der benötigten Aktionen der Gerätebaugruppen gemäß der in Verfahrensschritt a. geladenen Informationen zum nächsten vorbestimmten Zeitpunkt aus einer Menge von vorbestimmten Zeitpunkten beginnt, der auf den in Verfahrensschritt d. ermittelten frühesten möglichen Zeitpunkt folgt.

6. Verfahren nach einem der vorhergehenden Ansprüche, wobei bei einer unvorhergesehenen Verzögerung des momentanen und bisher geplanten Aktionszustandes der Gerätebaugruppen, z.B. durch Verzögerungen beim Prozessieren von anderen Proben in dem automatischen Analysegerät, in Verfahrensschritt f. die erste der benötigten Aktionen der Gerätebaugruppen gemäß der in Verfahrensschritt a. geladenen Informationen dynamisch auf einen der unvorhergesehenen Verzögerung entsprechenden späteren Zeitpunkt verschoben wird.

7. Verfahren nach einem der vorhergehenden Ansprüche, wobei sich die Probe in einer nicht ortsfesten Küvette befindet, und wobei mindestens eine, bevorzugt mindestens zwei Gerätebaugruppen als Aufnahmepositionen für die Küvette ausgestaltet sind.

8. Verfahren nach einem der vorhergehenden Ansprüche, wobei das Computersystem die Auslastung der einzelnen Gerätebaugruppen zum Prozessieren der Probe ermittelt und in einen vierten Speicher des Computersystems lädt.

9. Verfahren nach Anspruch 8, wobei das Computersystem die Auslastung der einzelnen Gerätebaugruppen optimiert, um eine möglichst hohe Auslastung von möglichst vielen der Gerätebaugruppen zu erreichen.

10. Automatisches Analysegerät (1) mit einer Steuereinheit mit einem Computersystem zur Steuerung des Prozessierens einer Probe und einer Mehrzahl von Gerätebaugruppen zum Prozessieren der Probe, wobei die Steuereinheit so konfiguriert ist, dass sie das Prozessieren der Probe in dem automatischen Analysegerät gemäß eines Verfahrens nach einem der vorhergehenden Ansprüche steuern kann.
